# EUROPEAN PATENT APPLICATION

(11) **EP 4 804 361 A1**
(43) Date of publication of application: **09.09.2026**
(21) Application number: 25161586.0
(22) Date of filing: 04.03.2025
(51) Int. Cl.: H02H 3/04, H02H 3/10, H02H 3/16, H02H 5/12, H02H 7/125, H02H 3/32, H02H 3/08

(54) **POWER SUPPLY DEVICE AND SYSTEM**

(71) Applicant: Koninklijke Philips N.V., 5656 AE Eindhoven (NL)
(72) Inventor: SCHEIBLER, Manuel, 5656 AG Eindhoven (NL); RUDOLPH, Matthias Alexander, 5656 AG Eindhoven (NL); BAUER, Kurt, 5656 AG Eindhoven (NL)
(74) Representative: Philips Intellectual Property & Standards

(57) **Abstract**

The present invention relates to a power supply device (10) and a system comprising a load device (20, 40, 50) and such a power supply device (10). The power supply device (10) comprises a housing (11), a power supply unit (12), a terminal unit (13), a live wire (14), a neutral wire (15) and a supply ground wire (16). A current measurement unit (17) measures current flowing in at least one of the live wire, the neutral wire and the supply ground wire and a protection unit (18) interrupts current flow in the live wire if the measured current and/or a current indication derived from the measured current exceeds a threshold.

## Description

### FIELD OF THE INVENTION

The present invention relates to a power supply device and a system, in particular a medical device and a medical system.

### BACKGROUND OF THE INVENTION

Medical equipment comprising various separated enclosures (i.e., different devices or components such as a power supply device and a load device, each having its own housing (enclosure)) with a single AC/DC in one of these enclosures requires distribution of power to the other enclosures via a power interface. For medical equipment the basic safety standard (IEC 60601-1) poses limits on leakage currents for normal and single fault condition on any metal surface that can be touched on any of the enclosures.

In such problem statements, the basic safety standard recommends the isolation of the power supply (i.e. the power supply device) provided to the separated enclosures (i.e. one or more load devices) to still achieve the low touch current limits (IEC60601-1 3rd ED, Annex A.4, Subclause 8.6.4 b). The disadvantage of an isolated power supply, however, is a very poor power efficiency (<= 80%).

### SUMMARY OF THE INVENTION

It is an object of the present invention to avoid the need for an isolated power supply.

In a first aspect of the present invention a power supply device is presented comprising:
- a housing;
- a power supply unit having a live wire supply terminal and a neutral wire supply terminal and configured to supply power to a load device;
- a terminal unit configured to electrically connect the load device to the power supply device, the terminal unit comprising a live wire output terminal for connection with a live wire input terminal of the load device, a neutral wire output terminal for connection with a neutral wire input terminal of the load device and a supply ground wire output terminal for connection with a load ground wire input terminal of the load device;
- a live wire connecting the live wire supply terminal and the live wire output terminal;
- a neutral wire connecting the neutral wire supply terminal and the neutral wire output terminal;
- a supply ground wire connecting the supply ground wire output terminal and neutral wire, wherein the supply ground wire is electrically connected to the housing;
- a current measurement unit configured to measure current flowing in at least one of the live wire, the neutral wire and the supply ground wire; and
- a protection unit configured to interrupt current flow in the live wire if the measured current and/or a current indication derived from the measured current exceeds a threshold.

**In** a further aspect of the present invention a system is presented comprising:
- a power supply device as disclosed herein; and
- one or more load devices coupled to the power supply device.

Preferred embodiments of the invention are defined in the dependent claims. It shall be understood that the claimed system has similar and/or identical preferred embodiments as the claimed device, in particular as defined in the dependent claims and as disclosed herein.

The present invention is based on the idea of distributing the power supply lines (power+ and power-; herein also called the live wire and the neutral wire) directly to the separated enclosure (i.e. the load device). **In** addition, an enclosure ground (herein also called "supply ground" for the power supply device and "load ground" for the load device) connection is distributed to the enclosure, preferably to each enclosure, which shall be connected to the enclosure touchable metal surfaces. This enclosure ground is functionally isolated from the power supply lines. **In** this way, no isolated power supply is needed.

The enclosure ground is connected to the neutral line in the power supply device. The current measurement unit measures current between enclosure ground and neutral line. Hereby, the current measurement unit logically separates enclosure ground and neutral line. **In** load devices, the enclosure ground (called load ground) is functionally isolated from supply lines. Generally, accessible metal parts of the housing shall either be connected to supply ground or shall comply to two means of protection according to IEC 60601-1.

To still achieve the maximum touch current requirements there are different approaches. The implementation shall ensure that the maximum voltage drop between the enclosure grounds (of the power supply device and of the load device) is below the limits required by the basic safety standards. **In** normal condition (without fault) it is ensured, because no current is on the enclosure ground connection. **In** single fault condition (e.g. a short between power and enclosure ground) a current might flow through the enclosure ground connection. The mitigation is the interruption of the power supply lines running to the faulty enclosure when either residual current of the power supply lines exceeds a defined limit or the current on the enclosure ground exceeds a limit, e.g. a predetermined or user-defined limit (the limit may depend on the implementation, kind of system, and application).

One of the advantages of the disclosed solution is that the power supply isolation including the efficiency losses (typically > 20%) can be avoided. This leads to less heat dissipation of certain parts, less required cooling efforts and/or a longer lifetime of the device due to less thermal stress. Furthermore, the disclosed solution leads to a more sustainable product, in particular by reducing the overall power consumption of the power supply device and/or the load device(s).

Through the proposed replacement of the inefficient isolation of a power supply touch current limits can be met by a simple current measurement in combination with a non-isolated power supply. A protection circuit may be added in an embodiment to identify fault conditions of the current measurement. The current measurement may either measures the enclosure ground current or the residual current of the power supply lines (live wire and neutral wire). A protection unit (e.g. an analog or digital protection circuit, a switch, etc.) disconnects the power supply line (live wire) to the separated enclosure (the load device) if the specified current limits are exceeded, i.e., it interrupts current flow in the live wire if the measured current and/or a current indication (e.g. a residual current) derived from the measured current exceeds a threshold. **In** an embodiment, a logic may be provided which compares this measurement against specified current limits.

The supply ground wire is electrically connected to the neutral wire. This provides that also a short circuit between neutral line and enclosure ground in a load device can be identified, since this would introduce a fault current on the supply ground in the power supply device. One aim of the present invention is to detect internal short circuits between "any" electrical net to enclosure ground. Further, if a neutral line would be shorted to enclosure ground a measurable current would be introduced when supply ground (= enclosure ground in supply device) is connected to the neutral line in the supply device. If they would not be connected in the supply device there would be no measurable fault current. The connection between the supply ground wire and the neutral wire thus provides an essential advantage.

**In** an embodiment, the supply ground wire is electrically connected to protective earth, i.e., the enclosure ground of the power supply device is connected to ground (protective earth; PE). A voltage drop to the load device may lead to a voltage difference between the accessible metal surface of the load device to ground. If this voltage is above a limit it violates IEC limits regarding touch currents.

**In** an embodiment, the protection unit comprises a live wire switch coupled in the live wire to interrupt current flow in the live wire. This ensures that in case of a short circuit the current flow to the load device(s) can be interrupted.

**In** another embodiment, the power supply device further comprises a control unit configured to determine if the measured current and/or the current indication exceed a respective threshold and to generate a control signal for controlling the protection unit to interrupt current flow in the live wire if the measured current and/or the current indication exceeds the respective threshold. The control unit can be implemented as analog or digital circuitry, logic circuitry, processing unit, controller, etc.

There are different options to determine if the measured current and/or a current indication derived from the measured current exceeds a threshold. According to one option, the current measurement unit may be configured to measure supply ground wire current flowing in the supply ground wire and the protection unit may be configured to interrupt current flow in the live wire if the measured supply ground wire current exceeds a current threshold. This option is simple to implement for continuous current measurement.

According to another (alternative or additional) option, the current measurement unit may be configured to measure live wire current flowing in the live wire and neutral wire current flowing in the neutral wire and the protection unit may be configured to interrupt current flow in the live wire if a current difference between the measured live wire current and the measured neutral wire current, representing the current indication, exceeds a current difference threshold. This option using residual current measurement can detect unwanted current independent of any enclosure ground interruptions (e.g. unwanted current through user touching the metal enclosure).

The terminal unit may be configured to electrically connect two or more load devices in series or in parallel to the power supply device, in particular via cable and/or connectors. Hence, there may be a flexible (removable) or fixed connection, which may be chosen based on the desired application, the kind of devices, etc., i.e., the terminal unit may be configured to couple the load device to the power supply device via a fixed connection or a connection allowing decoupling of the load device from the power supply device.

**In** another embodiment, the power supply device may further comprise a self test unit configured to detect faults in the protection unit. The self test may, e.g., be performed before every power-up of the power supply device to check if the protection unit, e.g. a live wire switch, can turn off the power supply to its live wire output terminal and thus to any load device(s).

**In** another embodiment, the power supply device may further comprise a signal processing unit configured to process one or more signals acquired by the load device or one or more sensors coupled to the load device and provided to the power supply device via one or more signal line terminals and one or more signal lines. Alternatively or in addition, the signal processing may be done in the respective load device.

**In** still another embodiment, the power supply device and/or load device may further comprise a user interface configured to output or transmit one or more signals. The user interface may e.g. be a display, a touchscreen, a wireless or wired signal transmission unit, a signal output terminal, etc.

The housing may comprise one or more electrically conductive housing parts, in particular metal housing parts. The supply ground wire may be electrically connected to the one or more electrically conductive housing parts. All connected housing parts are included in the protection of this invention and will not introduce a touch current above allowed limits of the basic safety standard. If electrically conductive housing parts are not connected to enclosure ground, other means of protection have to be integrated to meet basic safety criteria.

As mentioned above, the power supply device may be a medical device, in particular a docking station or patient monitor or battery supply device. The one or more load devices may include one or more devices selected from a group of devices comprising medical devices, portable device, stationary devices, measurement devices, treatment devices, patient monitors, battery supply devices, connectivity enhancement devices, and user interface devices. The invention may be applied in other applications and other kinds of systems, power supply devices and load devices as well.

In an embodiment, in order to connect and interact with the power supply device of the present invention, the load device comprises:
- a load housing;
- a load element;
- a load terminal unit configured to electrically connect the load device to the power supply device, the load terminal unit comprising a live wire input terminal for connection with the live wire output terminal of the power supply device, a neutral wire input terminal for connection with a neutral wire output terminal of the power supply device and a load ground wire input terminal for connection with a supply ground wire output terminal of the power supply device;
- a live wire connecting the live wire input terminal and the load element;
- a neutral wire connecting the neutral wire input terminal and the load element; and
- a load ground wire connecting the load ground wire input terminal and the load housing.

### BRIEF DESCRIPTION OF THE DRAWINGS

These and other aspects of the invention will be apparent from and elucidated with reference to the embodiment(s) described hereinafter. In the following drawings:
Fig. 1 shows a schematic diagram of a first embodiment of a system and a power supply device according to the present invention.
Fig. 2 shows a schematic diagram of a second embodiment of a system and a power supply device according to the present invention.
Fig. 3 shows a schematic diagram of a third embodiment of a system and a power supply device according to the present invention.
Fig. 4 shows a schematic diagram of a fourth embodiment of a system and a power supply device according to the present invention.

### DETAILED DESCRIPTION OF EMBODIMENTS

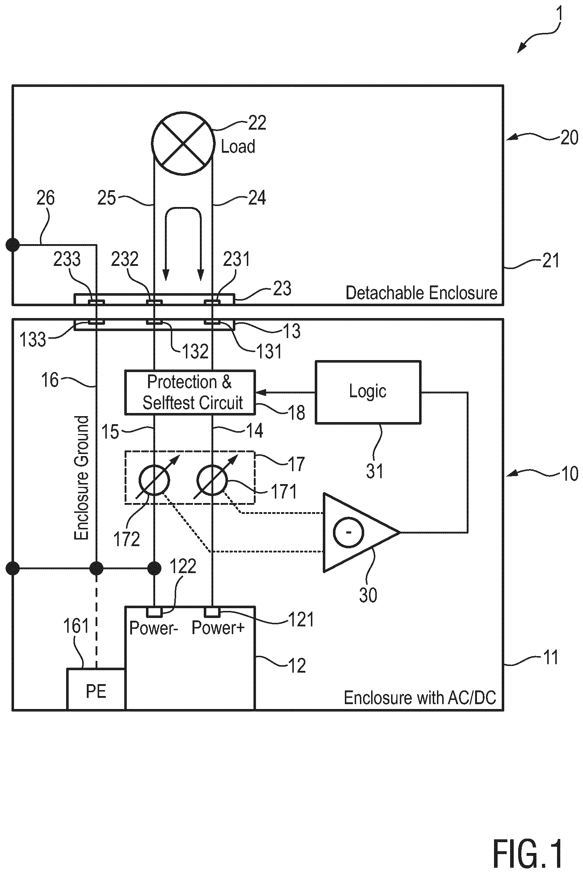

Fig. 1 shows a schematic diagram of a first embodiment of a system 1 and a power supply device 10 according to the present invention. In this embodiment, the system 1 comprises the power supply device 10 (also called enclosure with AC/DC) and a single load device 20 (also called detachable enclosure) coupled to the power supply device 10 in a way that it can be attached to and detached from the power supply device 10. The system 1 may e.g. be a medical system, such as a patient monitoring system, the power supply device 10 may e.g. be a docking station (such as the Philips IntelliVue 867043) that provides power to the load device 20, and the load device 20 may e.g. be a transport patient monitor (such as the Philips IntelliVue X3) that processes measurement signals (e.g. vital signs) and displays the measurement signal and medical information derived from them.

It shall be noted that the components of system 1 required for signal acquisition, processing and display are not shown in the figures and are generally configured and provided as needed and as conventionally known.

The power supply device 10 comprises a housing 11, a power supply unit 12 having a live wire supply terminal 121 and a neutral wire supply terminal 122 and configured to supply power to the load device 20, and a terminal unit 13 configured to electrically connect the load device 20 to the power supply device 10. The terminal unit 13 comprises a live wire output terminal 131 for connection with a live wire input terminal 231 of the load device 20, a neutral wire output terminal 132 for connection with a neutral wire input 232 terminal of the load device 20 and a supply ground wire output terminal 133 for connection with a load ground wire input terminal 233 of the load device 20.

The power supply device 10 further comprises a live wire 14 connecting the live wire supply terminal 121 and the live wire output terminal 131, a neutral wire 15 connecting the neutral wire supply terminal 122 and the neutral wire output terminal 132, and a supply ground wire 16 connecting the supply ground wire output terminal 133 to the neutral wire (and the neutral wire supply terminal 122). In this embodiment, the supply ground wire 16 also connects the supply ground wire output terminal 133 to protective earth 161. The supply ground wire 16 is electrically connected to the housing 11.

Still further, the power supply device 10 comprises a current measurement unit 17 configured to measure current flowing in at least one of the live wire 14, the neutral wire 15 and the supply ground wire 16. In the embodiment shown in Fig. 1, the current measurement unit 17 is configured to measure live wire current flowing in the live wire 14 and neutral wire current flowing in the neutral wire 15, e.g. by use of separate current measurement elements 171, 172 arranged in the respective wire.

Furthermore, the power supply device 10 comprises a protection unit 18 configured to interrupt current flow in the live wire 14 if the measured current and/or a current indication derived from the measured current, as measured by the measurement unit 17, exceeds a threshold. In the embodiment shown in Fig. 1, the protection unit 18 is configured to interrupt current flow in the live wire 14 if a current difference between the measured live wire current (measured by current measurement element 171) and the measured neutral wire current (measured by current measurement element 172), representing the current indication, exceeds a current difference threshold.

In the embodiment shown in Fig. 1, for detecting this difference a comparator 30 may be provided and for comparing this difference to a difference threshold, a logic circuit 31 may be provided between the current measurement unit 17 and the protection unit 18.

The load device 20 may generally be configured accordingly so that it can be coupled to the power supply device to be supplied with power. Generally, it comprises a load housing 21, a load element 22 (e.g. one or more of a processor, display, signal processing unit, etc.; generally, all elements that consume electric energy and require a power supply), and a load terminal unit 23 configured to electrically connect the load device 20 to the power supply device 10. The load terminal unit 23 comprising the live wire input terminal 231 for connection with the live wire output terminal 131 of the power supply device 10, a neutral wire input terminal 232 for connection with a neutral wire output terminal 132 of the power supply device 10 and a load ground wire input terminal 233 for connection with a supply ground wire output terminal 133 of the power supply device 10. Furthermore, like the power supply device 10, the load device 20 comprises a live wire 24 connecting the live wire input terminal 231 and the load element 22, a neutral wire 25 connecting the neutral wire input terminal 232 and the load element 22 and a load ground wire 26 connecting the load ground wire input terminal 233 and the load housing 21.

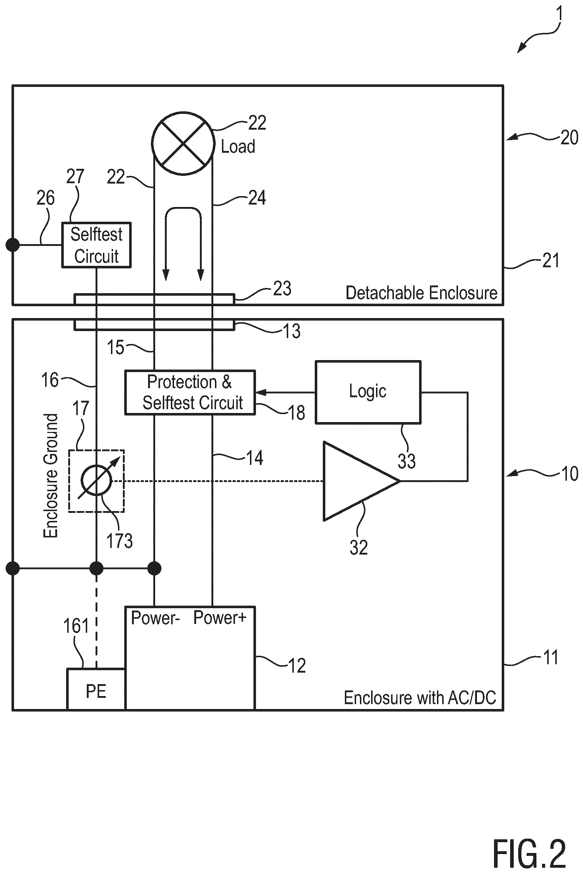

Fig. 2 shows a schematic diagram of a second embodiment of a system 1 and a power supply device 10 according to the present invention. The general layout of the power supply device 10 of this embodiment is identical to the layout of the power supply device 10 of the first embodiment shown in Fig. 1. Different from the first embodiment, the current measurement unit 17 is configured to measure supply ground wire current flowing in the supply ground wire 16. In an implementation of this embodiment, a current measurement element 173 may be arranged in the supply ground wire 16. The protection unit 18 is configured to interrupt current flow in the live wire 14 if the measured supply ground wire current exceeds a current threshold.

In the embodiment shown in Fig. 2, for amplifying this measured supply ground wire current, an operational amplifier 32 may be provided and for comparing this amplified current to a current threshold, a logic circuit 33 may be provided between the current measurement unit 17 and the protection unit 18. Current measurement may thus be implemented by a shunt resistor 173 plus an operational amplifier 32 to get a measurable signal for the logic circuit 33. The operational amplifier 32 may instead be part of the current measurement unit 17 but may also be seen as an optional signal conditioning element.

The layout of the load device 20 may be identical to the layout of the load device 20 of the first embodiment shown in Fig. 1, but an additional self test circuit 27 may be provided in the supply ground wire 26 in order to detect a potential (single fault) disconnection of the load ground path.

According to the present invention, a current measurement may thus either be implemented by a residual current measurement (Fig. 1) or an enclosure ground current measurement (Fig. 2). The logic (e.g. analog or digital circuitry, a processing unit, a controller, etc.) is provided to compare the current measurement result against specified current limits, which may be set or changed by the user or may be predetermined and fixed, e.g. based on the desired application, the desired sensitivity of the protection, etc. The protection circuit disconnects the power+ supply line when the specified current limit is exceeded. An additional self test circuit may be provided to meet single fault safe requirement IEC 60601-1:2005+AMD1:2012+AMD2:2020 CSV Clause 4.7 (which is not necessary for the main function).

Touchable metal parts of the respective device must be connected to a ground connection between the separated device, e.g. the supply ground wire 16 or the load ground wire 26. The power supply unit 12 is connected via a power+ and a power- connection for forward and return current. In an embodiment, the supply ground wire 16 and power- wire 15 are connected to PE (protective earth) 161 in the device that houses the mains power supply 12, e.g. a class I mains power supply, which may alternatively be provided in the load device 20.

In case of normal operation, no touch current is present on the metal parts of the respective device 10, 20. Consequently, all forward current through the power+ line 14 will be returned through the power- line 15. In case of a single fault, e.g. a short circuit between power- line 15 and supply ground wire 16, the return current will be split between power- line 15 and supply ground wire 16.

The split current portion flowing through the supply ground wire and load ground wire causes a voltage drop compared to earth potential at the load device(s). This voltage drop might lead to touch currents in case of a human touches the metal parts of the respective device. To prevent this, the split of current is detected according to the present invention, e.g. by one of the two alternatives illustrate in Figs. 1 and 2: i) a current measurement directly on the supply ground wire or b) a residual current measurement of power+ and power- to measure the difference between forward and return current.

Preferably, the current is measured continuously and monitored by a logic. The described fault can introduce a current measurement result above a specified limit. In this case the logic can trigger the cutoff of the power+ supply line to the load device to prevent any touch currents.

A self test circuit, which may be part of the protection circuit or a separate unit, may be used to detect if the protection provided according to the present invention is working in normal condition to avoid the risk of an undetected failure of the implementation. If the above-described fault (short circuit between power- and Enclosure Ground) were undetected, this might lead to touch currents above required limits and non-compliance with the IEC 60601-1 standard.

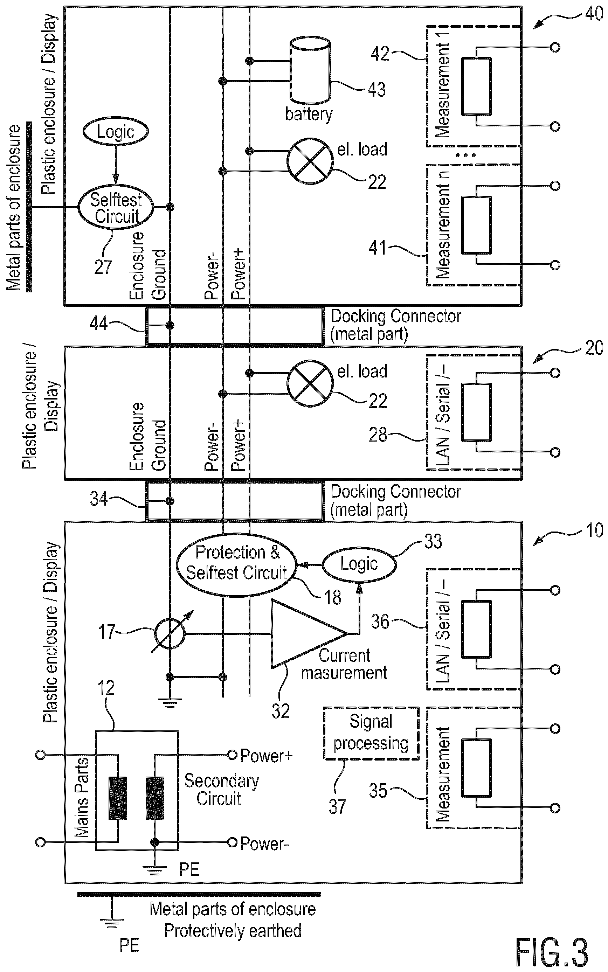

Fig. 3 shows a schematic diagram of a third embodiment of a system 1 and a power supply device 10 according to the present invention. In this embodiment, two load devices 20, 40 are connected in series to the power supply device via respective docking connectors 34, 44, which may be metal parts, and which may be part of one or both of the connected devices and may include or represent the respective terminals. The power supply device 10 may be configured as shown in Fig. 2 (or alternatively as shown in Fig. 1) and may additionally comprise one or more measurement interface(s) 35, e.g. for connecting sensors or other measurement equipment, and one or more data interfaces 36, e.g. LAN or serial interfaces, for data input and/or data output.

Further, a signal processing unit 37 configured to process one or more signals acquired by the load device (20, 40) or one or more sensors (not shown) coupled to the load device (via the interface(s) 35) and provided to the power supply device 10 via one or more signal line terminals and one or more signal lines. For instance, measured vital signs may be processed and/or displayed by the power supply device.

The load device 20 may be configured as shown in Fig. 1 (or alternatively as shown in Fig. 2) and may additionally comprise one or more measurement interface(s) 28. The load device 40 may be configured as the load device shown in shown in Fig. 2 (or alternatively as shown in Fig. 1) and may additionally comprise one or more measurement interface(s) 41, 42 and a battery 43.

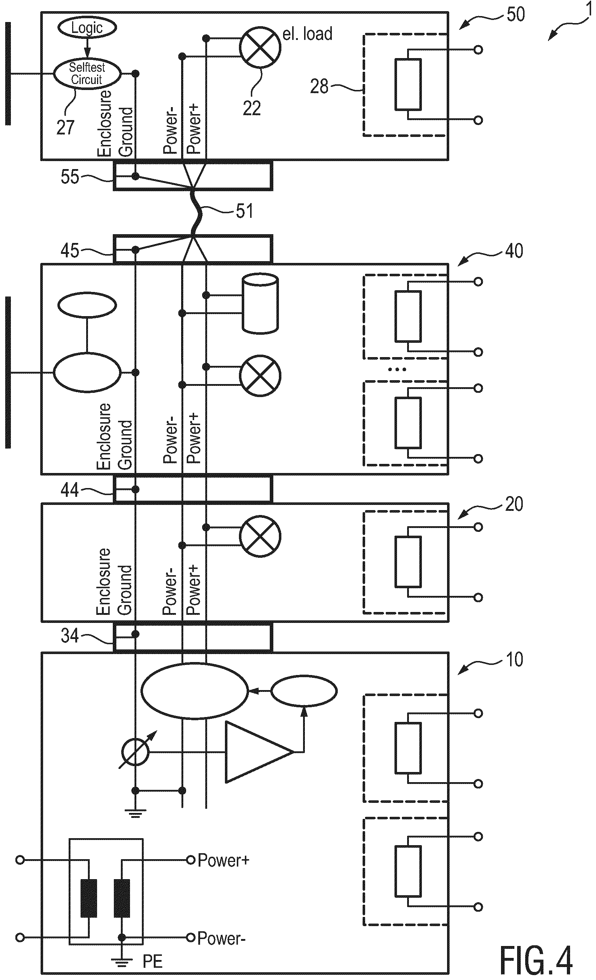

Fig. 4 shows a schematic diagram of a fourth embodiment of a system 1 and a power supply device 10 according to the present invention. In addition to the components of the system 1 shown in Fig. 3, it comprises an additional load device 50 that is connected in series to the load device 40 via a cable 51 coupled between the cable connectors 45, 55, which may be metal parts. The load device 40 may be configured as one of the load devices 20, 40 shown in any one of Figs. 1, 2 and 3.

Thus, as shown in Figs. 3 and 4, behind the protection circuit 18 of the power supply device 10 several (generally an unlimited number of) detachable enclosures/devices can be attached. They may be in series or in parallel and may be directly docked/coupled or via cable. Vital sign parameter measurement and/or SIP/SOP (signal input / signal output) interfaces (e.g. ethernet, USB, etc.) can be integrated in any enclosure (either with or without AC/DC).

With the present invention, every detachable enclosure / device with accessible metal parts does not have to fulfil the requirements for a "means of protection" according to IEC60601-1 (e.g. protective earth with 25A current capability) which allows to make the device more compact).

"Touch current" limits according to IEC 60601-1 are met due to separation of "enclosure ground" and "power-". The ground current measurement (or residual current measurement) plus the protection circuit is added to ensure safety also in case of a single fault (e.g. short circuit between "power-" and "enclosure ground").

In case of enclosure ground measurement, additional self test circuits may be added in every detachable enclosure (every load device) with accessible metal parts to detect a potential (single fault) disconnection of the enclosure ground path. This may not be required, when residual current measurement is used.

As explained above, it is not mandatory (but optionally possible) according to the present invention that the enclosure ground wire is connected to PE. In a preferred embodiment, the enclosure ground wire is connected to neutral wire in the power supply device. In one embodiment, touch current limits between any two accessible metal parts of all enclosures (with or without PE connection, e.g. on Class II equipment or if the power source is a battery) have to be met. In another embodiment, touch current limits between any accessible metal part and earth (use case as Class I equipment; also applicable without PE as Class II, but negligible risk).

The present invention prevents hazardous situations for users by detecting short circuits and disconnecting the live wire in fault cases. Connecting conductive housing parts ensures that these parts are included in the "fault" monitoring setup. If not connected to enclosure ground, it advisable to meet safety isolation for conductive housing parts (clearance and creepage distances resulting in bigger housings).

In summary, the present invention presents a new way to meet maximum touch current requirements specified by the basic safety standard for medical equipment (IEC 60601-1:2005+AMD1:2012+AMD2:2020 CSV clause 8.7.3c) by monitoring the residual current of a power supply and/or earth connection. If the fault current is above a defined threshold the power supply can be interrupted to avoid any patient and/or operator risk. Additionally, a self test functionality may be provided to detect a single fault condition within the protection circuit to meet the appropriate single fault safe requirement (IEC 60601-1:2005+AMD1:2012+AMD2:2020 CSV clause 4.7).

The present invention may be applied to medical electronic equipment including a Class I mains power supply (with protective earth connection) and separated enclosures connected to each other. It may be used in a platform for high-end patient monitors. Further, the present invention may be used in Class II mains powered or battery powered device.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Power supply device (10) comprising:
- a housing (11);
- a power supply unit (12) having a live wire supply terminal (121) and a neutral wire supply terminal (122) and configured to supply power to a load device (20, 40, 50);
- a terminal unit (13) configured to electrically connect the load device to the power supply device, the terminal unit comprising a live wire output terminal (131) for connection with a live wire input terminal (231) of the load device, a neutral wire output terminal (132) for connection with a neutral wire input terminal (232) of the load device and a supply ground wire output terminal (133) for connection with a load ground wire input terminal (233) of the load device;
- a live wire (14) connecting the live wire supply terminal (121) and the live wire output terminal (131);
- a neutral wire (15) connecting the neutral wire supply terminal (122) and the neutral wire output terminal (132);
- a supply ground wire (16) connecting the supply ground wire output terminal (133) and the neutral wire (15), wherein the supply ground wire is electrically connected to the housing (11);
- a current measurement unit (17) configured to measure current flowing in at least one of the live wire, the neutral wire and the supply ground wire; and
- a protection unit (18) configured to interrupt current flow in the live wire if the measured current and/or a current indication derived from the measured current exceeds a threshold.

2. Power supply device according to claim 1,
wherein the supply ground wire (16) is electrically connected to protective earth (161).

3. Power supply device according to any one of the preceding claims,
wherein the protection unit (18) comprises a live wire switch coupled in the live wire (14) to interrupt current flow in the live wire.

4. Power supply device according to any one of the preceding claims,
further comprising a control unit (30, 31, 32, 33) configured to determine if the measured current and/or the current indication exceed a respective threshold and to generate a control signal for controlling the protection unit (18) to interrupt current flow in the live wire if the measured current and/or the current indication exceeds the respective threshold.

5. Power supply device according to any one of the preceding claims,
wherein the current measurement unit (17, 173) is configured to measure supply ground wire current flowing in the supply ground wire and
wherein the protection unit (18) is configured to interrupt current flow in the live wire if the measured supply ground wire current exceeds a current threshold.

6. Power supply device according to any one of the preceding claims,
wherein the current measurement unit (17, 171, 172) is configured to measure live wire current flowing in the live wire and neutral wire current flowing in the neutral wire and
wherein the protection unit (18) is configured to interrupt current flow in the live wire if a current difference between the measured live wire current and the measured neutral wire current, representing the current indication, exceeds a current difference threshold.

7. Power supply device according to any one of the preceding claims,
wherein the terminal unit (13) is configured to electrically connect two or more load devices in series or in parallel to the power supply device (10), in particular via cable (51) and/or connectors (34, 44).

8. Power supply device according to any one of the preceding claims,
further comprising a self test unit (18) configured to detect faults in the protection unit (18).

9. Power supply device according to any one of the preceding claims,
further comprising:
- a signal processing unit (37) configured to process one or more signals acquired by the load device or one or more sensors coupled to the load device and provided to the power supply device via one or more signal line terminals and one or more signal lines, and/or
- a user interface (36) configured to output or transmit one or more signals.

10. Power supply device according to any one of the preceding claims,
wherein the housing (11) comprises one or more electrically conductive housing parts, in particular metal housing parts, and
wherein the supply ground wire (16) is electrically connected to the one or more electrically conductive housing parts.

11. Power supply device according to any one of the preceding claims,
wherein the terminal unit (13) is configured to couple the load device (20, 40, 50) to the power supply device via a fixed connection or a connection allowing decoupling of the load device from the power supply device.

12. System comprising:
- a power supply device (10) according to any one of the preceding claims; and
- one or more load devices (20, 40, 50) coupled to the power supply device.

13. System according to claim 12,
wherein the power supply device (10) is a medical device, in particular a docking station or patient monitor, and
wherein the one or more load devices (20, 40, 50) include one or more devices selected from a group of devices comprising medical devices, portable device, stationary devices, measurement devices, treatment devices, patient monitors, battery supply devices, connectivity enhancement devices, and user interface devices.

14. System according to claim 11 or 12,
wherein a load device (20) comprises:
- a load housing (21);
- a load element (22);
- a load terminal unit (23) configured to electrically connect the load device to the power supply device, the load terminal unit comprising a live wire input terminal (231) for connection with the live wire output terminal (131) of the power supply device, a neutral wire input terminal (232) for connection with a neutral wire output terminal (132) of the power supply device and a load ground wire input terminal (234) for connection with a supply ground wire output terminal (134) of the power supply device;
- a live wire (24) connecting the live wire input terminal (231) and the load element (22);
- a neutral wire (25) connecting the neutral wire input terminal (232) and the load element (22); and
- a load ground wire (26) connecting the load ground wire input terminal (233) and the load housing (21).
